# EUROPEAN PATENT APPLICATION

(11) **EP 4 622 370 A1**
(43) Date of publication of application: **24.09.2025**
(21) Application number: 23891125.9
(22) Date of filing: 29.08.2023
(51) Int. Cl.: H04W 72/0446, H04W 16/14, H04W 72/54, H04W 74/08, H04W 92/18

(54) **TERMINAL AND COMMUNICATION METHOD**

(30) Priority: 14.11.2022 JP 2022182178
(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); NAGATA, Satoshi, Tokyo 100-6150 (JP)
(74) Representative: Hoffmann Eitle
(86) International application number: PCT/JP2023/031331
(87) International publication number: WO 2024/105965

(57) **Abstract**

A terminal includes: a reception unit configured to perform an LBT (Listen before talk) without a random back-off, the LBT being performed for performing transmission in a unit time immediately after a first signal related to device-to-device direct communication, the first signal being transmitted in a COT (Channel occupancy time) obtained by one of terminals in an unlicensed band; a transmission unit configured to transmit a second signal in a case where the LBT is successful; and a control unit configured to detect a reservation of a third signal that is to be transmitted in the unit time by another terminal. In a case where a plurality of CPE starting positions can be applied to the second signal and the third signal, the control unit excludes a resource in the unit time from transmission candidates or performs transmission in the unit time, based on a CPE (Cyclic-Prefix extension) starting position that is applied to the third signal.

## Description

### FIELD OF THE INVENTION

The present invention relates to a terminal and a communication method in a wireless communication system.

### BACKGROUND OF THE INVENTION

In LTE (Long Term Evolution) and LTE successor systems (e.g., LTE-A (LTE Advanced), NR (New Radio) (also referred to as 5G)), a D2D (Device to Device) technology in which terminals communicate directly with each other without using a base station is being discussed (e.g., Non-Patent Document 1).

The D2D reduces traffic between the terminals and the base stations and enables communication between the terminals even when the base stations are unable to communicate during a disaster, etc. Although the 3GPP (registered trademark) (3rd Generation Partnership Project) refers to D2D as a "sidelink", the more generic term D2D is used herein. However, in the description of embodiments described below, sidelink is also used as needed.

The D2D communication is broadly classified into: D2D discovery for discovering other terminals capable of communication; and D2D communication (D2D direct communication, device to device direct communication, etc.) for direct communication between terminals. Hereinafter, when D2D communication and D2D discovery are not specifically distinguished, it is simply called D2D. A signal sent and received by D2D is called a D2D signal. Various use cases of V2X (Vehicle to Everything) services in NR have been discussed (e.g., Non-Patent Document 2).

In addition, in NR Release 17 (for example, Non-Patent Document 3), use of a frequency band that is higher than that of the conventional releases is being discussed. For example, applicable numerologies including subcarrier spacings, channel bandwidths, etc., physical layer design, and possible failures in actual wireless communication in the 52.6 GHz to 71 GHz frequency band have been discussed.

### CITATION LIST

### Non-Patent Document

Non-Patent Document 1: 3GPP TS 38.211 V17.1.0 (2022-03)
Non-Patent Document 2: 3GPP TR 22.886 V15.1.0 (2017-03)
Non-Patent Document 3: 3GPP TS 38.306 V17.0.0 (2022-03)
Non-Patent Document 4: 3GPP TS 37.213 V17.1.0 (2022-03)
Non-Patent Document 5: 3GPP TS 38.331 V17.0.0 (2022-03)

### SUMMARY OF THE INVENTION

### TECHNICAL PROBLEM

In a newly-operated frequency band in which higher frequencies that are higher than conventional frequencies are used, an unlicensed band is defined. In the unlicensed band, various regulations are specified, and, for example, an LBT (Listen before talk) is to be performed at the time of channel access. In the higher frequency band, in a case of performing a D2D communication, an operation adapted to the regulations in the unlicensed band is required. Here, the COT sharing is expected to be used in which, when one of terminals obtains a COT (Channel occupancy time), a plurality of other terminals perform subsequent transmissions in the COT. At this time, there is a possibility that an LBT performed by each of the plurality of other terminals may fail.

The present invention has been made in view of the above points, and an object is to apply the COT (Channel occupancy time) sharing to the device-to-device direct communication in an unlicensed band.

### SOLUTION TO PROBLEM

According to the disclosed technique, a terminal is provided. The terminal includes: a reception unit configured to perform an LBT (Listen before talk) without a random back-off, the LBT being performed for performing transmission in a unit time immediately after a first signal related to device-to-device direct communication, and the first signal being transmitted in a COT (Channel occupancy time) obtained by one of terminals in an unlicensed band; a transmission unit configured to transmit a second signal in a case where the LBT is successful; and a control unit configured to detect a reservation of a third signal that is to be transmitted in the unit time by another terminal. In a case where a plurality of CPE starting positions can be applied to the second signal and the third signal, the control unit excludes a resource in the unit time from transmission candidates or performs transmission in the unit time, based on a CPE (Cyclic-Prefix extension) starting position that is applied to the third signal.

### ADVANTAGEOUS EFFECTS OF INVENTION

According to the disclosed technique, the COT (Channel occupancy time) sharing can be applied to the device-to-device direct communication in an unlicensed band.

### BRIEF DESCRIPTION OF THE DRAWINGS

[Fig. 1] is a drawing for describing V2X.
[Fig. 2] is a sequence diagram illustrating an example (1) of a V2X operation.
[Fig. 3] is a sequence diagram illustrating an example (2) of a V2X operation.
[Fig. 4] is a sequence diagram illustrating an example (3) of a V2X operation.
[Fig. 5] is a sequence diagram illustrating an example (4) of a V2X operation.
[Fig. 6] is a drawing illustrating an example of a sensing operation.
[Fig. 7] is a flowchart for describing an example of a preemption operation.
[Fig. 8] is a drawing illustrating an example of a preemption operation.
[Fig. 9] is a drawing illustrating an example of a partial sensing operation.
[Fig. 10] is a drawing for describing an example of periodic-based partial sensing.
[Fig. 11] is a drawing for describing an example of contiguous partial sensing.
[Fig. 12] is a drawing illustrating an example of a frequency range in an embodiment of the present invention.
[Fig. 13] is a drawing for describing an example (1) of LBT.
[Fig. 14] is a drawing for describing an example (2) of LBT.
[Fig. 15] is a drawing for describing an example (3) of LBT.
[Fig. 16] is a drawing for describing an example (1) of an SL transmission in an embodiment of the present invention.
[Fig. 17] is a drawing for describing an example (2) of an SL transmission in an embodiment of the present invention.
[Fig. 18] is a drawing for describing an example (3) of an SL transmission in an embodiment of the present invention.
[Fig. 19] is a drawing illustrating an example of a functional configuration of a base station 10 in an embodiment of the present invention.
[Fig. 20] is a drawing illustrating an example of a functional structure of a terminal 20 in an embodiment of the present invention.
[Fig. 21] is a drawing illustrating an example of a hardware structure of the base station 10 or the terminal 20 in an embodiment of the present invention.
[Fig. 22] is a drawing illustrating an example of a structure of a vehicle 2001 in an embodiment of the present invention.

### DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

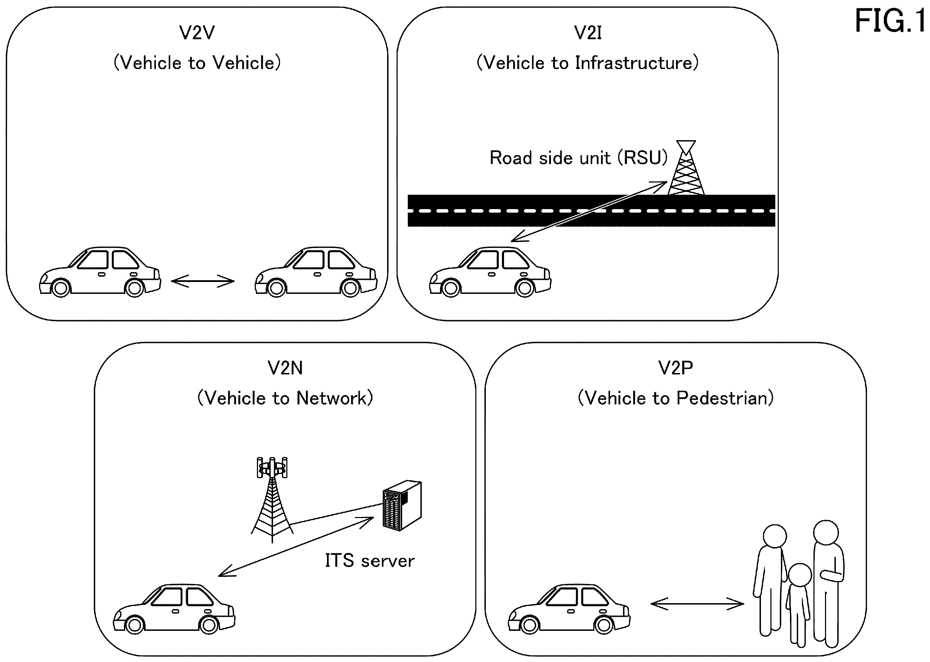

Fig. 1 is a drawing illustrating V2X. In 3GPP, enhancing D2D functions to realize V2X (Vehicle to Everything) or eV2X (enhanced V2x) has been discussed and technical specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on the roadside; V2N (Vehicle to Network) referring to a form of communication performed between a vehicle and an ITS server; and V2P (Vehicle to Pedestrian) referring to a form of communication performed between a vehicle and a mobile terminal that is carried by a pedestrian.

Further, in 3GPP, V2X using LTE/NR's cellular communication and communication between terminals has been discussed. V2X using cellular communication may be referred to as cellular V2X. In NR V2X, there have been discussions to realize higher system capacity, reduced latency, higher reliability, and QoS (Quality of Service) control.

With respect to LTE V2X or NR V2X, it is anticipated that discussions will go beyond 3GPP specifications in the future. For example, the following items are expected to be discussed: how to secure interoperability; how to reduce cost by implementing higher layers; how to use or how to switch between multiple RATs (Radio Access Technologies); how to handle regulations of each country; how to obtain and distribute data of LTE V2X or NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals carried by people, may be apparatuses mounted on drones or aircraft, or may be base stations, RSUs, relay stations (relay nodes), terminals capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) Resource arrangement in the time domain
2) Resource arrangement in the frequency domain
3) Synchronization signal to be referred to (including SLSS (Sidelink Synchronization Signal))
4) Reference signal that is used for path loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to a terminal 20, Mode 3 and Mode 4 are defined. In Mode 3, transmission resources are dynamically allocated using a DCI (Downlink Control Information) that is transmitted from a base station 10 to the terminal 20. In addition, SPS (Semi Persistent Scheduling) is available in Mode 3. In Mode 4, the terminal 20 autonomously selects transmission resources from a resource pool.

It should be noted that a slot in an embodiment of the present invention may be read as (replaced with) a symbol, a mini slot, a subframe, a radio frame, or a TTI (Transmission Time Interval). In addition, a subframe or a slot is an example of a unit period and may be replaced with a term that indicates a different unit period. Further, a cell in an embodiment of the present invention may be read as (replaced with) a cell group, a carrier component, a BWP (bandwidth part), a resource pool, a resource, a RAT (Radio Access Technology), a system (including a wireless LAN), etc.

Note that, in an embodiment of the present invention, the terminal 20 is not limited to a V2X terminal, and may be any type of terminal that performs D2D communication. For example, the terminal 20 may be a terminal carried by a user, such as a smartphone, or an IoT (Internet of Things) device, such as a smart meter.

In addition, it is expected that a HARQ (Hybrid automatic repeat request) is supported for unicast and groupcast of sidelink in NR-SL. In addition, SFCI (Sidelink Feedback Control Information) containing a HARQ response is defined in NR-V2X. In addition, SFCI transmission via PSFCH (Physical Sidelink Feedback Channel) is under consideration.

Note that, in the following description, it is assumed that PSFCH is used in the transmission of HARQ-ACK on sidelink. However, this is just an example. For example, PSCCH may be used to transmit HARQ-ACK on sidelink, PSSCH may be used to transmit HARQ-ACK on sidelink, or other channels may be used to transmit HARQ-ACK on sidelink.

Hereinafter, for the sake of convenience, all information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

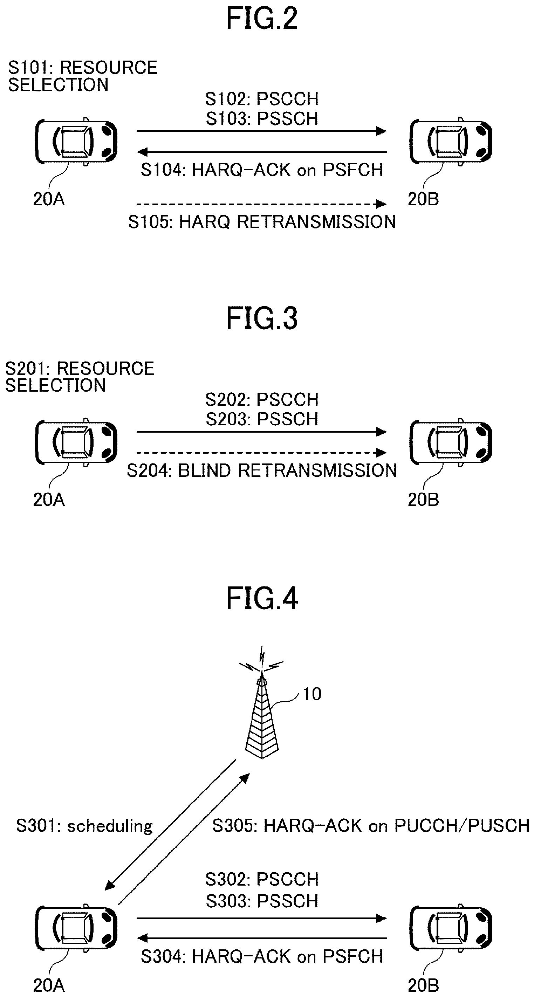

Fig. 2 is a sequence diagram illustrating an example (1) of a V2X operation. As shown in Fig. 2, the wireless communication system according to an embodiment of the present invention may include a terminal 20A and a terminal 20B. Although there are many user devices in actuality, Fig. 2 shows only the terminal 20A and the terminal 20B as examples.

Hereinafter, when the terminals 20A, 20B, or the like are not particularly distinguished, the term "terminal 20" or "user device" will be used for the sake of convenience. Fig. 2 shows, for example, a case where both the terminal 20A and the terminal 20B are within a coverage of a cell. However, the operation in an embodiment of the present invention embodiment can be applied to a case where the terminal 20B is outside the coverage.

As described above, in an embodiment, the terminal 20 is, for example, a device mounted in a vehicle such as an automobile and has a cellular communication function to function as a UE in LTE or NR and a sidelink function. The terminal 20 may be a conventional portable terminal (such as a smartphone). Further, the terminal 20 may also be an RSU. The RSU may be a UE-type RSU having the function of a UE or a gNB-type RSU having the function of a base station apparatus.

Note that the terminal 20 need not be a device in a single housing. For example, even when various sensors are arranged and distributed in a vehicle, a device including the various sensors may be a terminal 20.

Further, processing contents of sidelink transmission data of the terminal 20 are basically the same as those of UL transmission in LTE or NR. For example, the terminal 20 scrambles a codeword of the transmission data, modulates to generate complex-valued symbols, maps the complex-valued symbols to one or two layers, and performs precoding. Further, the precoded complex-valued symbols are mapped to a resource element to generate a transmission signal (e.g., complex-valued time-domain SC-FDMA signal), and the generated signal is transmitted from each antenna port.

Note that the base station 10 has a function of cellular communication to function as a base station in LTE or NR and a function of enabling communication of the terminal 20 according to an embodiment of the present invention (e.g., resource pool setting, resource allocation, etc.). Further, the base station 10 may also be an RSU (gNB-type RSU).

Further, in the wireless communication system according to an embodiment of the present invention, a signal waveform used by the terminal 20 for SL or UL may be OFDMA, SC-FDMA, or other signal waveforms.

The terminal 20 transmits a sidelink synchronization signal block (S-SSB) as an SL synchronization signal. The S-SSB may include S-PSS (Sidelink Primary Synchronization Signal), S-SSS (Sidelink Secondary Synchronization Signal), and PSBCH (Physical Sidelink Broadcast Channel). It is to be noted that the names of S-SSB, S-PSS, S-SSS, and the like, are examples, and the names may be names other than S-SSB, S-PSS, S-SSS, and the like.

The terminal 20 transmits S-SSB to another terminal 20, based on a signal received from the base station apparatus 10, a GNSS (Global Navigation Satellite System) signal, or a signal received from another terminal 20. It is to be noted that the terminal 20 may transmit autonomously determined S-SSB to another terminal 20 in a case where the terminal 20 cannot transmit S-SSB based on any signal from the base station apparatus 10, GNSS, and another terminal 20. The resource available for S-SSB may be a periodic slot and may be referred to as an S-SSB occasion.

In step S101, the terminal 20A autonomously selects a resource to be used for PSCCH and PSSCH from a resource selection window having a predetermined period. The resource selection window may be configured to the terminal 20 by the base station 10. Here, the predetermined period of the resource selection window may be specified by an implementation condition of the terminal such as a processing time or a maximum allowable packet delay time, or may be specified in advance by technical specifications, and the predetermined period may be referred to as a section in the time domain.

In step S102 and step S103, the terminal 20A transmits, using the resource autonomously selected in step S101, SCI (Sidelink Control Information) via PSCCH and/or PSSCH and transmits SL data via PSSCH. For example, the terminal 20A may transmit the PSCCH using a frequency resource that is adjacent to or is not adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected resource in the SCI and transmit the included information. It is to be noted that the resource available for the PSFCH may be a periodic slot and a symbol at the ending (except for the last symbol) in the slot, and may be referred to as a PSFCH occasion.

In step S104, the terminal 20B transmits a HARQ-ACK for the received data to the terminal 20A using the PSFCH resource specified by the received SCI.

In step S105, when the HARQ-ACK received in step S104 indicates a request for retransmission, that is, when the HARQ-ACK is a NACK (negative response), the terminal 20A retransmits the PSCCH and the PSSCH to the terminal 20B. The terminal 20A may retransmit the PSCCH and PSSCH by using an autonomously selected resource.

Note that in a case where HARQ control with HARQ feedback is not performed, step S104 and step S105 need not be performed.

Fig. 3 is a sequence diagram illustrating an example (2) of a V2X operation. A non-HARQ-control-based blind retransmission may be performed to improve the transmission success rate or reach distance.

In step S201, the terminal 20A autonomously selects a resource to be used for PSCCH and PSSCH from a resource selection window having a predetermined period. The resource selection window may be configured to the terminal 20 by the base station 10.

In step S202 and step S203, the terminal 20A transmits, using the resource autonomously selected in step S201, SCI via PSCCH and/or PSSCH, and transmits SL data via PSSCH. For example, the terminal 20A may transmit the PSCCH using a frequency resource adjacent to the PSSCH frequency resource with the same time resource as at least a portion of the time resource of the PSSCH.

In step S204, the terminal 20A retransmits, using the resource autonomously selected in step S201, the SCI via PSCCH and/or PSSCH and the SL data via PSSCH to the terminal 20B. The retransmission in step S204 may be performed multiple times.

Note that, if the blind retransmission is not performed, step S204 need not be performed.

Fig. 4 is a sequence diagram illustrating an example (3) of a V2X operation. The base station 10 may perform scheduling of the sidelink. That is, the base station 10 may determine a sidelink resource to be used by the terminal 20 and transmit information indicating the resource to the terminal 20. In addition, in a case where HARQ control with HARQ feedback is to be applied, the base station 10 may transmit information indicating a PSFCH resource to the terminal 20.

In step S301, the base station 10 performs SL scheduling by sending DCI (Downlink Control Information) to the terminal 20A via PDCCH. Hereafter, for the sake of convenience, the DCI for SL scheduling is called SL scheduling DCI.

Further, in step S301, it is assumed that the base station 10 also transmits DCI for DL scheduling (which may be referred to as DL assignment) to the terminal 20A via the PDCCH. Hereafter, for the sake of convenience, the DCI for DL scheduling is called DL scheduling DCI. The terminal 20A, which has received the DL scheduling DCI, receives DL data via PDSCH using a resource specified by the DL scheduling DCI.

In step S302 and step S303, the terminal 20A transmits, using the resource specified by the SL scheduling DCI, SCI (Sidelink Control Information) via PSCCH and/or PSSCH and transmits SL data via PSSCH. Note that, in the SL scheduling DCI, only a PSSCH resource need be specified. In this case, for example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The SCI received via the PSCCH and/or PSSCH includes information of a PSFCH resource for the terminal 20B to send a HARQ-ACK for reception of the data.

The information of the resource is included in the DL scheduling DCI or SL scheduling DCI transmitted from the base station 10 in step S301, and the terminal 20A acquires the information of the resource from the DL scheduling DCI or the SL scheduling DCI and includes the acquired information in the SCI. Alternatively, the DCI transmitted from the base station 10 may be configured so as not to include the information of the resource, and the terminal 20A may autonomously include the information of the resource in the SCI and transmit the SCI including the information.

In step S304, the terminal 20B transmits a HARQ-ACK for the received data to the terminal 20A using the PSFCH resource specified by the received SCI.

In step S305, the terminal 20A transmits the HARQ-ACK using, for example, a PUCCH (Physical uplink control channel) resource specified by the DL scheduling DCI (or SL scheduling DCI) at the timing (e.g., slot-by-slot timing) specified by the DL scheduling DCI (or SL scheduling DCI), and the base station 10 receives the HARQ-ACK. The HARQ-ACK codebook may include both HARQ-ACK received from the terminal 20B or HARQ-ACK generated based on PSFCH that is not received, and HARQ-ACK for the DL data. Note, however, the HARQ-ACK for DL data is not included if DL data is not allocated. In NR Rel. 16, the HARQ-ACK codebook does not include HARQ-ACK for DL data.

Note that in a case where HARQ control with HARQ feedback is not performed, step S304 and/or step S305 need not be performed.

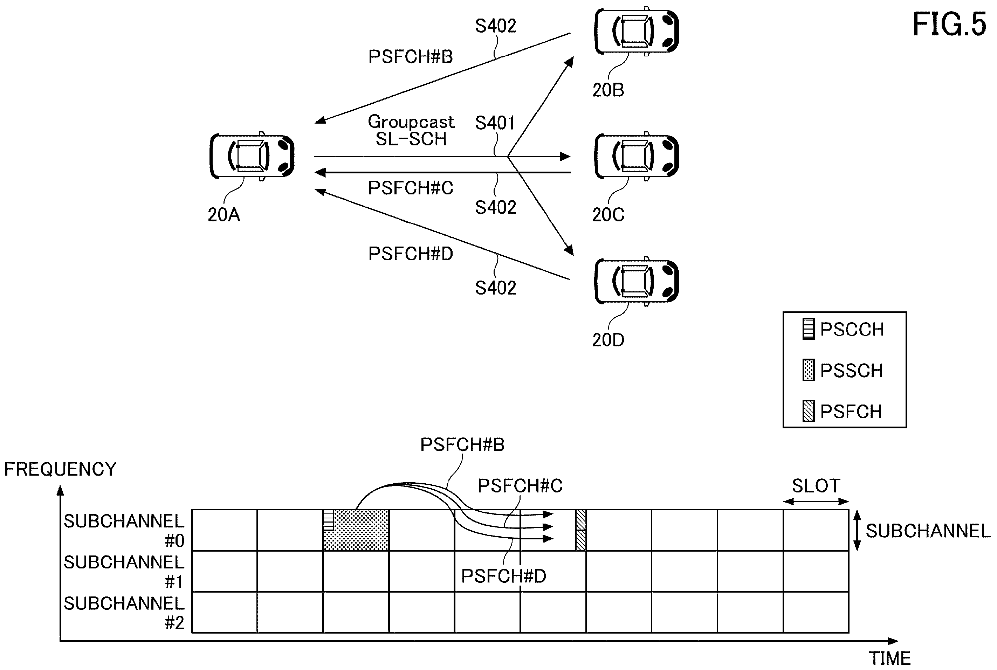

Fig. 5 is a sequence diagram illustrating an example (4) of a V2X operation. As described above, it is supported in the NR sidelink that the HARQ response is transmitted via PSFCH. Note that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, with ACK and NACK being identified by the difference of sequences and/or cyclic shifts. The format of PSFCH is not limited to the above-described format. PSFCH resources may be located at the last symbol of a slot or a plurality of end symbols of a slot including the last symbol. Further, a period N may be configured or predefined for the PSFCH resource. The period N may be configured or predefined in units of slots.

In Fig. 5, the vertical axis corresponds to the frequency domain and the horizontal axis corresponds to the time domain. PSCCH may be arranged at the first (beginning) symbol, may be arranged at a plurality of first symbols of a slot, or may be arranged at a plurality of symbols from a symbol other than the first symbol of a slot. PSFCH resources may be arranged at the last (ending) symbol of a slot, or may be arranged at a plurality of symbols at the ending of a slot. Note that consideration of a symbol for AGC (Automatic Gain Control) and a symbol for switching transmission/reception may be omitted for the above "beginning of a slot" and "ending of a slot". That is, for example, in a case where one slot is composed of 14 symbols, the "beginning of a slot" and the "ending of a slot" may respectively mean a first symbol and a last symbol among 12 symbols in which the original first symbol and the original last symbol are excluded. In an example shown in Fig. 5, three subchannels are configured in a resource pool, and two PSFCHs are arranged in a slot three slots after a slot in which PSSCH is arranged. Arrows from PSSCH to PSFCH indicate an example of PSFCHs associated with PSSCH.

In a case of groupcast option 2 in which ACK or NACK is transmitted in a HARQ response in the NR-V2X groupcast, it is necessary to determine resources used for transmitting and receiving PSFCH. As shown in Fig. 5, in step S401, the terminal 20A that is a transmitting-side terminal 20 performs groupcast to the terminal 20B, the terminal 20C, and the terminal 20D that are receiving-side terminals 20 via SL-SCH (Sidelink Shared Channel). In the subsequent step S402, the terminal 20B uses PSFCH#B, the terminal 20C uses PSFCH#C, and the terminal 20D uses PSFCH#D to transmit HARQ responses to the terminal 20A. Here, as shown in an example of Fig. 5, in a case where the number of PSFCH resources available is less than the number of receiving-side terminals 20 belonging to the group, it is necessary to determine how to allocate PSFCH resources. Note that the transmitting-side terminal 20 may obtain the number of the receiving-side terminals 20 in the groupcast. Note that, in groupcast option 1, only NACK is transmitted as a HARQ response, and ACK is not transmitted.

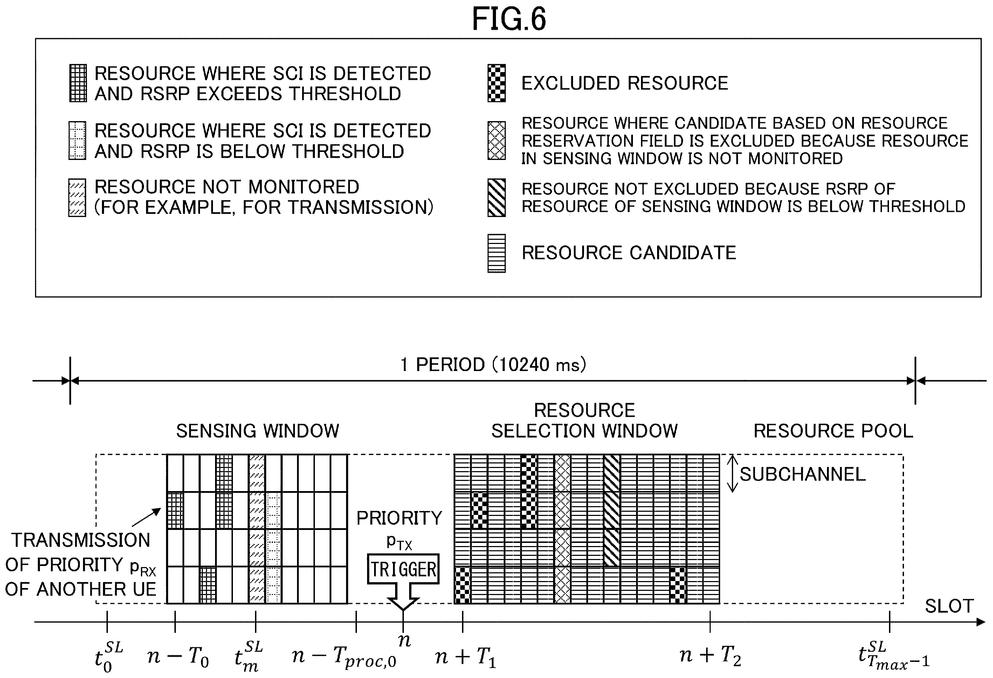

Fig. 6 is a drawing illustrating an example of a sensing operation in NR. In the resource allocation mode 2, the terminal 20 selects a resource and performs transmission. As illustrated in Fig. 6, the terminal 20 performs sensing in a sensing window in a resource pool. According to the sensing, the terminal 20 receives a resource reservation field or a resource assignment field included in SCI transmitted from another terminal 20, and identifies available resource candidates in a resource selection window in the resource pool, based on the received field. Subsequently, the terminal 20 randomly selects a resource from the available resource candidates.

Further, as shown in Fig. 6, the configuration of the resource pool may have a period. For example, the period may be a period of 10240 milliseconds. Fig. 6 is an example in which slots from slot t₀^{SL} to slot t_{TmaX-1}^{SL} are configured as a resource pool. The resource pool in each cycle may have an area configured by, for example, a bitmap.

In addition, as illustrated in Fig. 6, it is assumed that a transmission trigger in the terminal 20 occurs in a slot n and the priority of the transmission is p_{TX}. In the sensing window from slot n-T₀ to the slot immediately before the slot n-T_{proc,0}, the terminal 20 can detect, for example, that another terminal 20 is performing transmission having priority p_{RX}. In a case where SCI is detected in the sensing window and the RSRP (Reference Signal Received Power) exceeds a threshold value, the resource in the resource selection window corresponding to the SCI is excluded. In addition, in a case where SCI is detected in the sensing window and the RSRP is less than the threshold value, the resource in the resource selection window corresponding to the SCI is not excluded. The threshold value may be, for example, a threshold value Th_{pTX, pRX} configured or defined for each resource in the sensing window, based on the priority p_{TX} and the priority p_{RX}.

In addition, a resource in the resource selection window that is a candidate of resource reservation information corresponding to a resource that is not monitored in the sensing window due to transmission, such as the slot tₘ^{SL} shown in Fig. 6, is excluded.

In the resource selection window from slots n+T₁ to n+T₂, as shown in Fig. 6, resources occupied by other UEs are identified, and resources from which the identified resources are excluded become available resource candidates. Assuming that the set of available resource candidates is S_{A}, in a case where the S_{A} is less than 20% of the resource selection window, the resource identification may be performed again by raising the threshold value Th_{pTX, pRX} configured for each resource in the sensing window by 3 dB. That is, by raising the threshold value Th_{pTX, pRX} and performing the resource identification again, resources that are not excluded because the RSRP is below the threshold value may be increased, and the set S_{A} of resource candidates may become greater than or equal to 20% of the resource selection window. The operation of raising the threshold value Th_{pTX, pRX} configured for each resource in the sensing window by 3 dB, and of performing the resource identification again in a case where the S_{A} is less than 20% of the resource selection window, may be repeatedly performed.

The lower layer of the terminal 20 may report the S_{A} to the higher layer. The higher layer of the terminal 20 may perform random selection for the S_{A} to determine a resource to be used. The terminal 20 may perform sidelink transmission using the determined resource. For example, the higher layer may be a MAC layer, and the lower layer may be a PHY layer or a physical layer.

Although an operation of the transmission-side terminal 20 has been described with reference to Fig. 6, the reception-side terminal 20 may detect data transmission from another terminal 20, based on a result of sensing or partial sensing and receive data from the other terminal 20.

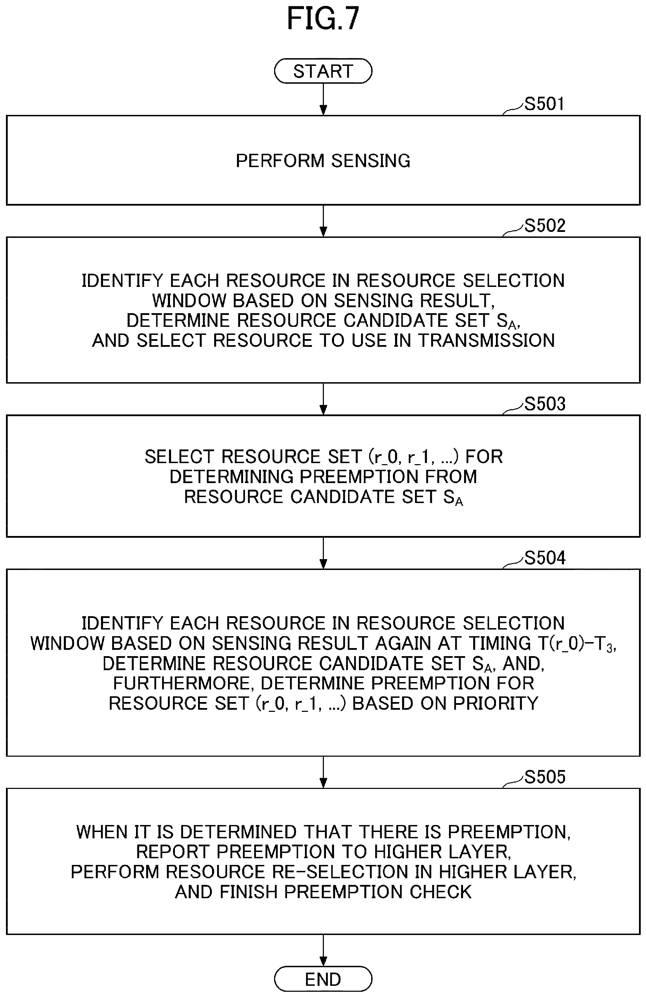

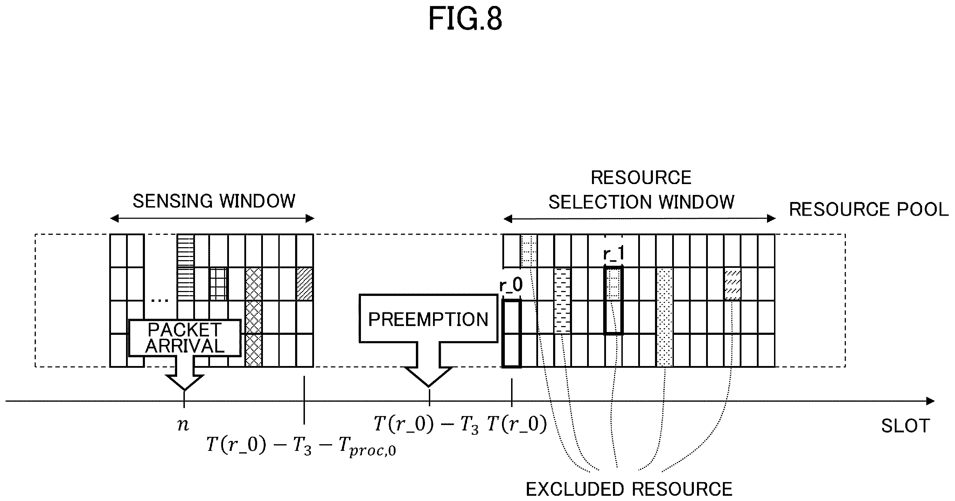

Fig. 7 is a flowchart illustrating an example of preemption in NR. Fig. 8 is a diagram illustrating an example of preemption in NR. In step S501, the terminal 20 performs sensing in the sensing window. In a case where the terminal 20 performs a power saving operation, the sensing may be performed in a limited period specified in advance. Subsequently, the terminal 20 identifies each resource in the resource selection window, based on the sensing result, determines a set S_{A} of resource candidates, and selects a resource to be used for transmission (S502). Subsequently, the terminal 20 selects a resource set (r_0, r_1, ...) for determining preemption from the set S_{A} of resource candidates (S503). The resource set may be indicated from the higher layer to the PHY layer as a resource for determining whether preemption has been performed.

In step S504, at the timing of T(r_0)-T₃ shown in Fig. 8, the terminal 20 again identifies each resource in the resource selection window, based on the sensing result to determine the set S_{A} of resource candidates, and further determines preemption for the resource set (r_0, r_1, ...), based on the priority. For example, with respect to r_1 illustrated in Fig. 8, the SCI transmitted from the other terminal 20 is detected by repeated sensing, and r_1 is not included in S_{A}. In a case where the preemption is enabled, in a case where the value prio_RX indicating the priority of the SCI transmitted from the other terminal 20 is lower than the value prio_TX indicating the priority of the transport block to be transmitted from the terminal 20 itself, the terminal 20 determines that the resource r_1 has been preempted. Note that the lower the value indicating the priority, the higher the priority. That is, in a case where the value prio_RX indicating the priority of the SCI transmitted from the other terminal 20 is higher than the value prio_TX indicating the priority of the transport block to be transmitted from the terminal 20 itself, the terminal 20 does not exclude the resource r_1 from the S_{A}. Alternatively, in a case where the preemption is enabled only for a specific priority (for example, sl-PreemptionEnable is pl1, p12, ..., or pl8), the priority is referred to as prio_pre. Here, in a case where the value prio_RX indicating the priority of the SCI transmitted from the other terminal 20 is lower than prio_pre, and where the value prio_RX is lower than the value prio_TX indicating the priority of the transport block to be transmitted from the terminal 20 itself, the terminal 20 determines that the resource r_1 has been preempted.

In step S505, in a case where it is determined that there is preemption in step S504, the terminal 20 indicates the preemption to the higher layer, reselects resources at the higher layer, and ends the preemption check.

Note that, in a case where re-evaluation is performed instead of the preemption check, in step S504, after determining the set S_{A} of resource candidates, in a case where the S_{A} does not include resources of the resource set (r_0, r_1, ...), the resource is not used and the resource reselection is performed at the higher layer.

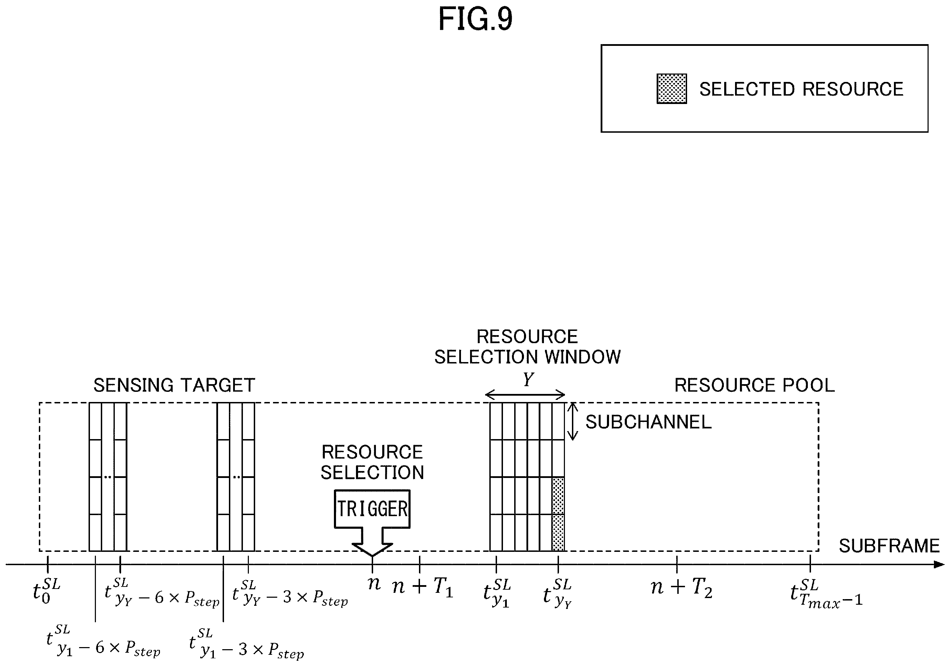

Fig. 9 is a drawing illustrating an example of a partial sensing operation in LTE. In a case where the partial sensing is configured by the higher layer in the LTE sidelink, the terminal 20 selects resources and performs transmission as shown in Fig. 9. As shown in Fig. 9, the terminal 20 performs partial sensing for a part of the sensing window in the resource pool, i.e., the sensing target. According to the partial sensing, the terminal 20 receives the resource reservation field contained in the SCI transmitted from another terminal 20 and identifies the available resource candidates in the resource selection window in the resource pool, based on the field. Subsequently, the terminal 20 randomly selects a resource from the available resource candidates.

Fig. 9 is an example in which subframes from subframe t₀^{SL} to subframe t_{TmaX-1}^{SL} are configured as a resource pool. The resource pool may have a target area configured by a bitmap, for example. As shown in Fig. 9, the transmission trigger at the terminal 20 is assumed to occur in subframe n. As shown in Fig. 9, among the subframes from subframe n+T₁ to subframe n+T₂, Y subframes from subframe t_{y1}^{SL} to subframe t_{yY}^{SL} may be configured as the resource selection window.

The terminal 20 can detect, for example, that another terminal 20 is performing transmission in one or more sensing targets from subframe t_{y1-k×Pstep}^{SL} to subframe t_{yY-k×Pstep}^{SL}, the length being Y subframes. The k may be determined by a 10-bit bitmap, for example. Fig. 9 shows an example in which the third and sixth bits of the bitmap are configured to "1" indicating that the partial sensing is to be performed. That is, in Fig. 9, subframes from subframe t_{y1-6×Pstep}^{SL} to subframe t_{yY-6×Pstep}^{SL}, and subframes from subframe t_{y1-3×Pstep}^{SL} to subframe t_{yY-3×Pstep}^{SL} are configured as the sensing targets. As described above, the kth bit of the bitmap may correspond to a sensing window from subframe t_{y1-k×Pstep}^{SL} to subframe t_{yY-k×Pstep}^{SL}. Note that yᵢ corresponds to the index (1...Y) in the Y subframes.

Note that k may be configured in a 10-bit bitmap or defined in advance, and Pₛₜₑₚ may be 100 ms. However, in a case where SL communication is performed using DL and UL carriers, Pₛₜₑₚ may be (U/(D+S+U))*100 ms. U corresponds to the number of UL subframes, D corresponds to the number of DL subframes, and S corresponds to the number of special subframes.

In a case where SCI is detected in the above sensing target and the RSRP exceeds the threshold value, the resource in the resource selection window corresponding to the resource reservation field of the SCI is excluded. Also, in a case where SCI is detected in the sensing target and the RSRP is less than the threshold value, the resource in the resource selection window corresponding to the resource reservation field of the SCI is not excluded. The threshold value may be, for example, a threshold value Th_{pTX, pRX} configured or defined for each resource in the sensing target, based on the transmission-side priority p_{TX} and the reception-side priority p_{RX}.

As shown in Fig. 9, in a resource selection window configured in the Y subframes in the section [n+T₁, n+T₂], the terminal 20 identifies a resource occupied by another UE, and the resources, excluding the identified resource, become available resource candidates. Note that the Y subframes need not be contiguous. Assuming that the set of available resource candidates is S_{A}, in a case where the S_{A} is less than 20% of the resource selection window, the resource identification may be performed again by raising the threshold value Th_{pTX, pRX} configured for each resource in the sensing target by 3 dB.

That is, resources that are not excluded because the RSRP is less than the threshold value may be increased by raising the threshold value Th_{pTX, pRX} and by performing the resource identification again. In addition, the RSSI of each resource in the S_{A} may be measured and the resource with the lowest RSSI may be added to the set S_{B}. The operation of adding the resource with the lowest RSSI included in the S_{A} to the S_{B} may be repeated until the set S_{B} of resource candidates becomes equal to or greater than 20% of the resource selection window.

The lower layer of the terminal 20 may report the S_{B} to the higher layer. The higher layer of the terminal 20 may perform random selection for the S_{B} to determine a resource to be used. The terminal 20 may perform sidelink transmission using the determined resource. Note that the terminal 20 may use the resource periodically without performing the sensing for a predetermined number of times (e.g., Cᵣₑₛₑₗ times) once the resource is secured.

Here, power saving based on random resource selection and partial sensing is described in the technical specifications in NR sidelink. The terminal 20 to which partial sensing is applied performs reception and sensing only in specific slots in the sensing window. In other words, the terminal 20 may perform partial sensing in which resource identification is performed by sensing only limited resources as compared to full sensing, and in which resource selection from the identified resource set is performed. Further, the terminal 20 may, without excluding resources from the resources in the resource selection window, cause the resources in the resource selection window to be an identified resource set and may perform random selection to select a resource from the identified resource set.

Note that the method of: performing random selection at the time of resource selection; and using sensing information at the time of reevaluation or preemption checking, may be treated as partial sensing or as random selection.

The following 1) and 2) may be applied as operations in sensing. Note that the sensing and the monitoring may be read interchangeably, and at least one of: measurement of received RSRP; acquisition of reserved resource information; or acquisition of priority information, may be included in the operation.

### 1) Periodic-based partial sensing

Operation of determining the sensing slots, based on the reservation periodicity in a mechanism in which sensing is performed only for some slots. Note that the reservation periodicity is a value related to the resource reservation period field. The period may be replaced by the periodicity.

### 2) Contiguous partial sensing

Operation of determining the sensing slots, based on an aperiodic reservation in a mechanism in which sensing is performed only for some slots. Note that the aperiodic reservation is a value related to the time resource assignment field.

In addition, a plurality of resource allocation methods may be configured for a resource pool. In addition, SL-DRX (Discontinuous reception) is supported as one of the power-saving functions. That is, the reception operation is performed only for a predetermined time period.

As described above, partial sensing is supported as one of the power-saving functions. In a resource pool in which partial sensing is configured, the terminal 20 may perform the periodic-based partial sensing described above. The terminal 20 may receive, from the base station 10, information for configuring a resource pool in which partial sensing is configured and in which periodic reservation is configured to be enabled.

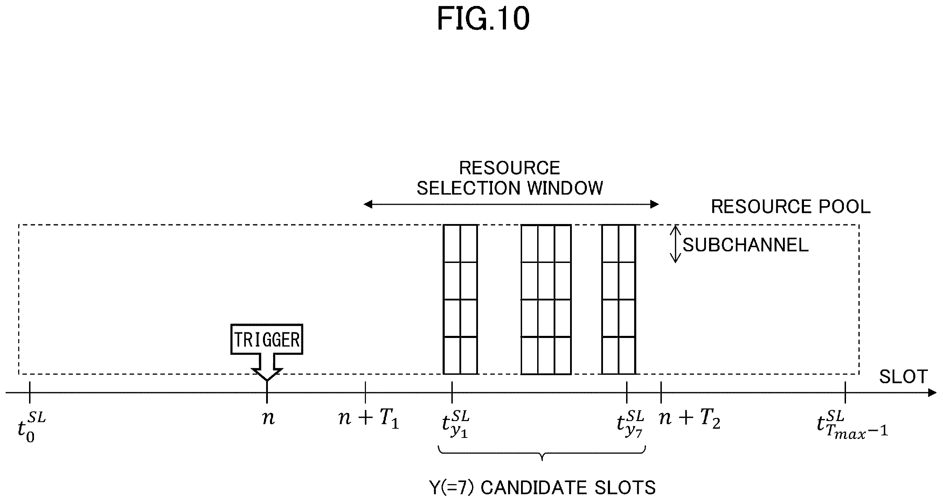

Fig. 10 is a drawing illustrating an example of periodic-based partial sensing. As shown in Fig. 10, Y candidate slots for resource selection are selected from a resource selection window [n+T₁, n+T₂].

Assuming that t_{y}^{SL} is a slot included in the Y candidate slots, sensing may be performed by having t_{y-k×Preserve}^{SL} as a target slot of the periodic-based partial sensing.

The Pᵣₑₛₑᵣᵥₑ may correspond to any value included in sl-ResouceReservePeriodList that is configured or predefined. Alternatively, a value of Pᵣₑₛₑᵣᵥₑ that is limited to a subset of sl-ResouceReservePeriodList may be configured or predefined. The Pᵣₑₛₑᵣᵥₑ and sl-ResouceReservePeriodList may be configured for each transmission resource pool of the resource allocation mode 2. In addition, as a UE implementation, a period included in sl-ResouceReservePeriodList other than the limited subset, may be monitored. For example, the terminal 20 may additionally monitor an occasion corresponding to P_RSVP_Tx.

Regarding the k value, the terminal 20 may monitor the latest sensing occasion in a certain reservation period that is: before slot n of the resource selection trigger; or before the first slot of the Y candidate slots subject to a processing time limitation. In addition, the terminal 20 may additionally monitor a periodic sensing occasion corresponding to a set of one or more k values. For example, as the k value, a value corresponding to the latest sensing occasion in a certain reservation period that is: before slot n of the resource selection trigger; or before the first slot of the Y candidate slots subject to the processing time limitation, and a value corresponding to the sensing occasion immediately before the latest sensing occasion in the certain reservation period, may be configured.

As described above, partial sensing is supported as one of the power-saving functions. In a resource pool in which partial sensing is configured, the terminal 20 may perform the contiguous partial sensing described above. The terminal 20 may receive, from the base station 10, information for configuring a resource pool in which partial sensing is configured and in which aperiodic reservation is configured to be enabled.

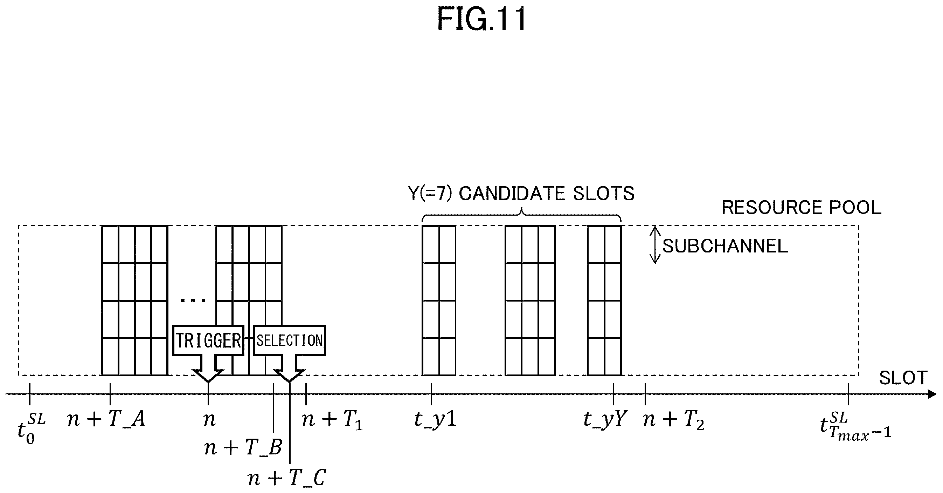

Fig. 11 is a drawing illustrating an example of contiguous partial sensing. As shown in Fig. 11, in a case where the trigger for resource selection is slot n, the terminal 20 selects the Y candidate slots for resource selection from the resource selection window [n+T₁, n+T₂]. Fig. 11 is an example for the case of Y = 7. As shown in Fig. 11, the beginning of the Y candidate slots is denoted as slot t_{y1}, the subsequent slot is denoted as t_{y2}, ..., and the ending of the Y candidate slots is denoted as slot t_{yY}.

The terminal 20 performs sensing in the section [n+T_{A}, n+T_{B}] and performs resource selection at n+T_{B} or after n+T_{B} (referred to as n+Tc). Note that the periodic-based partial sensing described above may be additionally performed. Note that T_{A} and T_{B} of the section [n+T_{A}, n+T_{B}] may be any value. In addition, n may be replaced with an index of a slot from among the Y candidate slots.

In addition, the mark [ may be replaced with the mark (, and the mark ] may be replaced with the mark ). Note that, for example, the section [a, b] is a section from a slot a to a slot b, and includes the slot a and the slot b. For example, the section (a, b) is a section from a slot a to a slot b, and does not include the slot a and the slot b.

Note that, candidate resources that are targets of resource selection are described as Y candidate slots, and all slots or some slots in the section [n+T₁, n+T₂] may be candidate slots.

In addition, as a method of improving the reliability and the delay performance, the inter-terminal coordination is described in the technical specifications. For example, the inter-terminal coordination method 1 and the inter-terminal coordination method 2 as shown below have been developed into the technical specifications. Hereinafter, the terminal 20 that transmits coordination information is described as UE-A, and the terminal 20 that receives the coordination information is described as UE-B.

Inter-terminal coordination method 1) A preferred resource set and/or a non-preferred resource set for transmission by the UE-B is transmitted from the UE-A to the UE-B. Hereinafter, the inter-terminal coordination method 1 is also described as the IUC scheme 1 (Inter-UE coordination scheme 1).

Inter-terminal coordination method 2) In a resource indicated by SCI that is received from the UE-B, the UE-A transmits, to the UE-B, information indicating: an expectation of a collision with another transmission; and/or a resource in which the collision is detected. The information may be transmitted via PSFCH. Hereinafter, the inter-terminal coordination method 2 is also described as the IUC scheme 2 (Inter-UE coordination scheme 2).

With respect to the 3GPP release 16 or release 17 sidelink, specifications are being developed targeting 1) and 2) below.
1) Environment in the ITS (Intelligent Transport Systems) band in which there are only 3GPP terminals
2) Environment in the FR1 (Frequency range 1) and FR2 licensed band defined in NR in which UL resources can be used for SL

There have been discussions to newly target an unlicensed band for the sidelink of 3GPP release 18 and later. For example, an unlicensed band such as the 5 GHz to 7 GHz band, 60 GHz band, or the like.

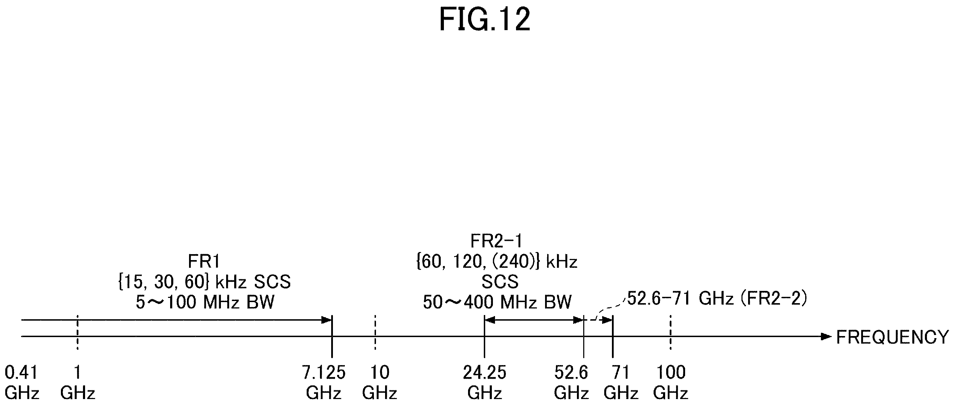

Fig. 12 is a drawing illustrating an example of a frequency band that is used in the wireless communication system. In the NR specifications of 3GPP Release 15 and Release 16, for example, an operation in a frequency band of 52. 6 GHz or more has been discussed. Note that, as shown in Fig. 12, FR (Frequency range) 1 in which current operation is defined is a frequency band from 410 MHz to 7. 125 GHz, SCS (Sub carrier spacing) is 15 kHz, 30 kHz, or 60 kHz, and bandwidth is from 5 MHz to 100 MHz.

FR2-1 is a frequency band from 24.25 GHz to 52.6 GHz, SCS is 60 kHz, 120 kHz or 240 kHz, and the bandwidth is from 50 MHz to 400 MHz. As illustrated in Fig. 12, FR2-2 may be assumed to be from 52.6 GHz to 71 GHz. Furthermore, a frequency band beyond 71 GHz may be assumed to be supported.

In a case of using a band exceeding 52.6 GHz, Cyclic Prefix-Orthogonal Frequency Division Multiplexing (CP-OFDM)/Discrete Fourier Transform - Spread OFDM (DFT-S-OFDM) having larger Sub-Carrier Spacing (SCS) may be applied.

In addition, in a high frequency band such as FR2-2, an increase in phase noise between carriers becomes a problem. Accordingly, application of larger (wider) SCS or single carrier waveform may be required.

For example, a band from 5.15 GHz to 5.35 GHz, a band from 5.47 GHz to 5.725 GHz, a band that is equal to or higher than 5.925 GHz, or the like is expected as an example of an unlicensed band in the 5 GHz to 7 GHz band.

For example, a band from 59 GHz to 66 GHz, a band from 57 GHz to 64 GHz or 66 GHz, a band from 59.4 GHz to 62.9 GHz, or the like is expected as an example of an unlicensed band in the 60 GHz band.

In the unlicensed band, various regulations are specified so as to avoid influence on other systems or other devices.

For example, in the 5 GHz to 7 GHz band, an LBT (Listen before talk) is to be performed when accessing a channel. The base station 10 or the terminal 20 performs power detection in a predetermined period immediately before transmission, and stops the transmission in a case where the power exceeds a predetermined value, that is, in a case where transmission from another device is detected (may be referred to as LBT failure). In addition, the maximum channel occupancy time (MCOT) is specified. MCOT is a maximum time duration in which transmission continuation is allowed in a case where transmission is started after the LBT, and is 4 ms in Japan, for example.

In addition, in a case where the transmission uses a carrier bandwidth, X% or more of the bandwidth must be used as the occupied channel bandwidth (OCB) requirements. For example, in Europe, as much as 80% to 100% of NCB (nominal channel bandwidth) is required to be used. The purpose of the OCB requirements is for the channel access power detection be performed correctly.

In addition, with respect to the maximum transmission power and the maximum power spectral density, it is specified that the transmission is to be performed with predetermined transmission power or less in order to avoid excessive interference. For example, in Europe, the maximum transmission power is 23 dBm in the 5150 MHz to 5350 MHz band. In addition, for example, in Europe, the maximum power spectral density is 10 dBm/MHz in the 5150 MHz to 5350 MHz band.

For example, in the 60 GHz band, an LBT is to be performed when accessing a channel. The base station 10 or the terminal 20 performs power detection in a predetermined period immediately before transmission, and stops the transmission in a case where the power exceeds a predetermined value, that is, in a case where transmission from another device is detected. In addition, with respect to the maximum transmission power and the maximum power spectral density, it is specified that the transmission is to be performed with predetermined transmission power or less. In addition, the capability of satisfying the OCB requirements is specified.

There are four types of channel access procedures defined in NR as described below based on the behavior difference with respect to the LBT time direction (duration for performing sensing). It is to be noted that the above-described sensing is an operation different from the above-described sidelink sensing and will be referred to as the LBT sensing for the sake of distinction.
Type 1) Variable duration LBT sensing is performed before transmission. Also referred to as category-4 LBT.
Type 2A) 25 µs of LBT sensing is performed before transmission. Also referred to as category-2 LBT.
Type 2B) 16 µs of LBT sensing is performed before transmission. Also referred to as category-2 LBT.
Type 2C) Start transmission without LBT. The same as the transmission in the licensed band.

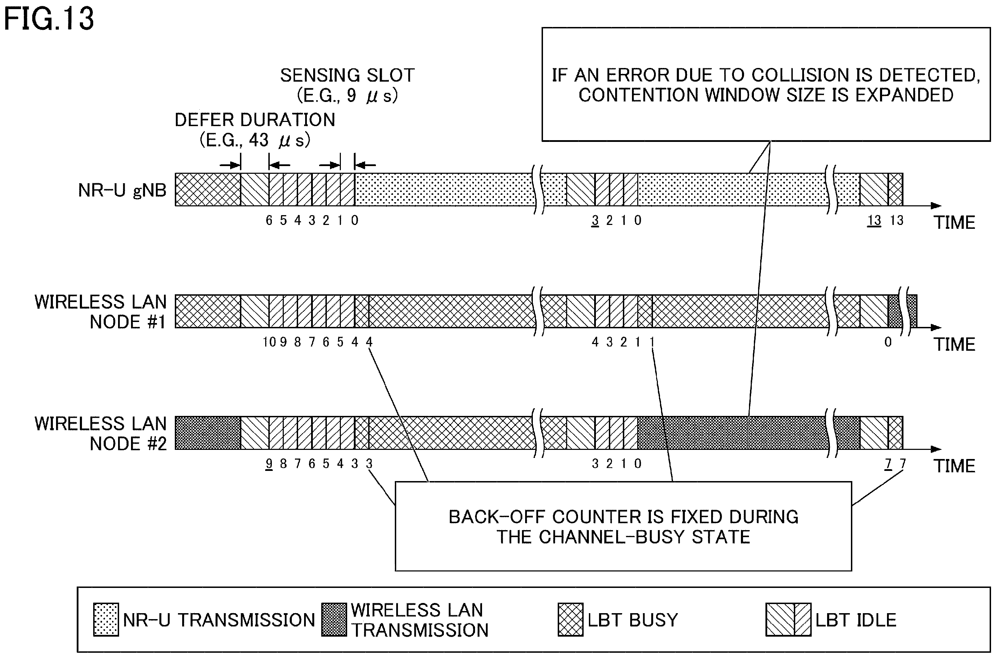

Fig. 13 is a drawing for describing an example (1) of LBT. Fig. 13 is an example of Type 1 channel access procedure. Type 1 is further classified into four classes indicating the channel access priority classes (CAPC) based on the LBT sensing length difference. LBT sensing is performed in the following two durations.

The first duration is a prioritization period or a defer duration, and has a length of 16+9×mₚ [µs]. With respect to mₚ, a fixed value is defined for each of the channel access priority classes.

The second duration is a backoff procedure, and has a length of 9×N [µs]. The value of N is randomly determined from a certain range (refer to the CWS adjustment procedure in Non-Patent Document 4). N is an initial value of the backoff counter, and the value of the backoff counter decreases by one each time power of a signal of another device is not detected for a period of 9 [µs].

With respect to the above, the 9 µs of LBT sensing duration may be referred to as an LBT sensing slot duration.

In an example of Fig. 13, mₚ is equal to 3 and the defer duration is 43 µs. As illustrated in Fig. 13, the backoff counter is fixed during the channel-busy state. In addition, as illustrated in Fig. 13, in a case where an error is detected because of a transmission collision between NR-U gNB and the wireless LAN node #2, the contention window size (CWS) of the NR-U gNB is expanded from 3 to 13.

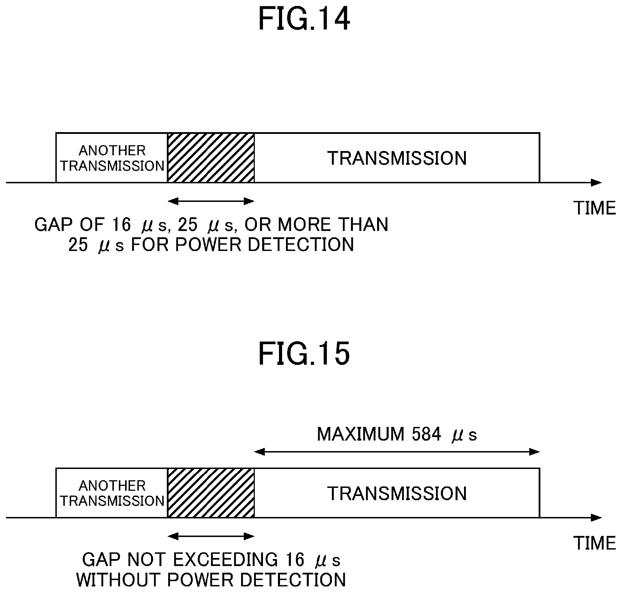

Fig. 14 is a drawing for describing an example (2) of LBT. Fig. 14 is an example of a Type 2A or Type 2B channel access procedure without random backoff. A gap for power detection of 25 µs or more than 25 µs for type 2A is configured before the transmission and a gap for power detection of 16 µs for type 2B is configured before the transmission.

Fig. 15 is a drawing for describing an example (3) of LBT. Fig. 15 is an example of a Type 2C channel access procedure. As illustrated in Fig. 15, power detection is not performed before a transmission, and the transmission is performed immediately after the gap that does not exceed 16 µs. The transmission duration may be up to 584 µs.

As described above, a plurality of LBT types are supported in NR-U. In the above-described Type 1, with respect to the initial value N of the backoff counter, a random value in a section between zero and CWₚ whose value range is determined based on the channel access priority class p is configured. Table 1 illustrates examples of: mₚ; CW_{p,min} that is a minimum value of CWₚ; and CW_{p,max} that is a maximum value of CWₚ, which are defined for each channel access priority class p in UL.

**[Table 1]**

| Class p | mₚ | CW_{min,p} | CW_{max,p} |
|---|---|---|---|
| 1 | 2 | 3 | 7 |
| 2 | 2 | 7 | 15 |
| 3 | 3 | 15 | 1023 |
| 4 | 7 | 15 | 1023 |

As illustrated in Table 1, mₚ, CW_{p,min}, and CW_{p,max} are determined according to the channel access priority class p. In a case where p is 1, the LBT duration calculated from Table 1 is 34 µs minimum and 88 µs maximum. In a case where p is 2, the LBT duration calculated from Table 1 is 34 µs minimum and 160 µs maximum. In a case where p is 3, the LBT duration calculated from Table 1 is 43 µs minimum and 9286 µs maximum. In a case where p is 4, the LBT duration calculated from Table 1 is 79 µs minimum and 9286 µs maximum. It is to be noted that Table 1 is a table used for UL.

The LBT type and the channel access priority class may be determined based on an indication from the base station 10, a channel type, or the like. The gap of 25 µs or 16 µs may be configured by the scheduling of the base station 10 by taking into account the TA (Timing Advance) and the CP extension.

The LBT applied for channel access is performed for each predetermined bandwidth (for example, 20 MHz). This predetermined bandwidth may be referred to as an LBT channel, may be referred to as an RB set, may be referred to as an LBT band, or may be referred to as another name. In a case where power is not detected in the LBT channel that includes each transmission, the transmission can be performed. It is to be noted that each CC in Uu may be defined by using a bandwidth that is wider than the LBT channel. In other words, the wideband operation is supported. It is to be noted that Uu is a radio interface between the UTRAN (Universal Terrestrial Radio Access Network) and UE (User equipment).

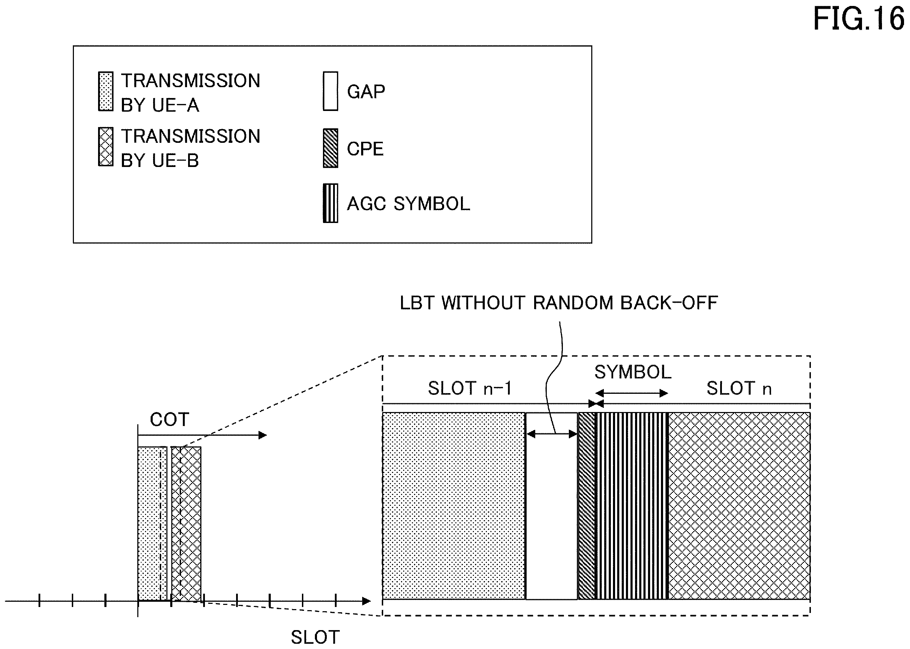

Fig. 16 is a drawing for describing an example (1) of an SL transmission in an embodiment of the present invention. COT sharing by a UE-A and a UE-B is being discussed. For example, as illustrated in Fig. 16, the UE-A obtains a COT and performs an SL transmission, and then, the UE-B performs a subsequent transmission in the COT after applying the LBT Type 2A, 2B, or 2C. The transmission by the UE-B is treated as a transmission in the COT obtained by the UE-A, and the UE-B performs the transmission by applying the LBT without a random backoff (for example, LBT type 2A, 2B, or 2C).

As illustrated in Fig. 16, after transmission by the UE-A in slot n-1, the CP extension (CPE) is applied in order to adapt the time gap to the LBT type 2A, 2B, or 2C. After the CPE, transmission of an AGC symbol and transmission by the UE-B are performed in slot n.

Two CPE lengths are being discussed: a single CPE starting position and multiple CPE starting positions. FDM transmissions between UEs can be always performed by using the single CPE starting position. In a case where a plurality of UEs intend to use the same time and frequency resource, a transmission by a UE with higher priority can be prioritized by using the multiple CPE starting positions. It is to be noted that the CPE starting position and the CPE starting symbol can be replaced with each other.

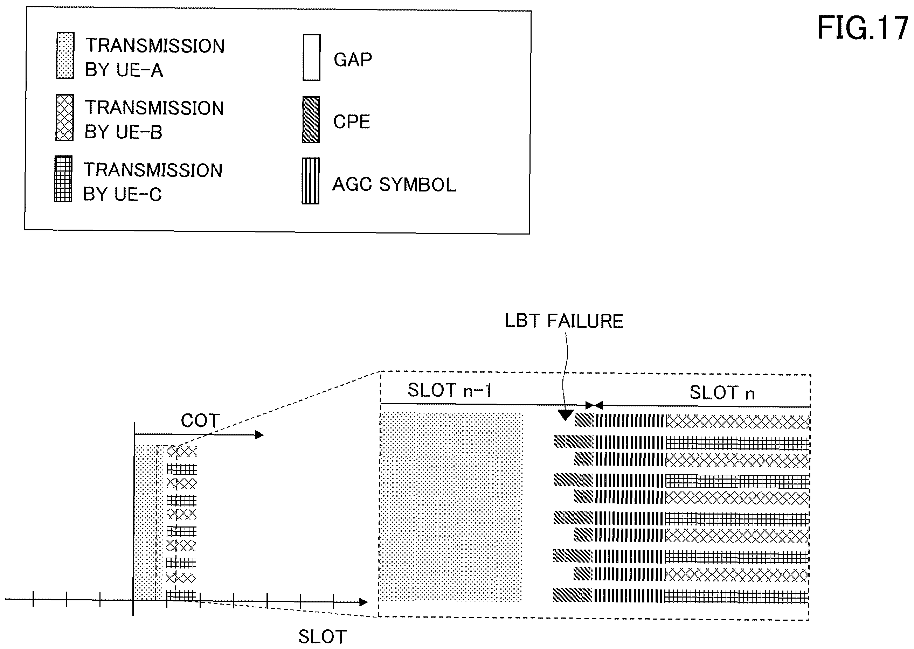

Fig. 17 is a drawing for describing an example (2) of an SL transmission in an embodiment of the present invention. In a case where a plurality of CPE starting positions are available, as illustrated in Fig. 17, with respect to frequency division multiplexed transmissions whose time resources are the same and whose frequency resources are different, a transmission that starts from a later timing cannot be performed due to an LBT failure. In other words, an FDM transmission from a different CPE starting position cannot be performed. The delay performance will be deteriorated by performing resource reselection when a transmission resource is determined and the transmission cannot be performed due to the above-described LBT failure immediately before the transmission.

Therefore, in SL-U, in a case where a plurality of CPE starting positions are available, resource exclusion and/or transmission may be performed based on the CPE starting position of a resource that is reserved by another UE. The resource exclusion may mean that the resource is excluded from transmission candidates.

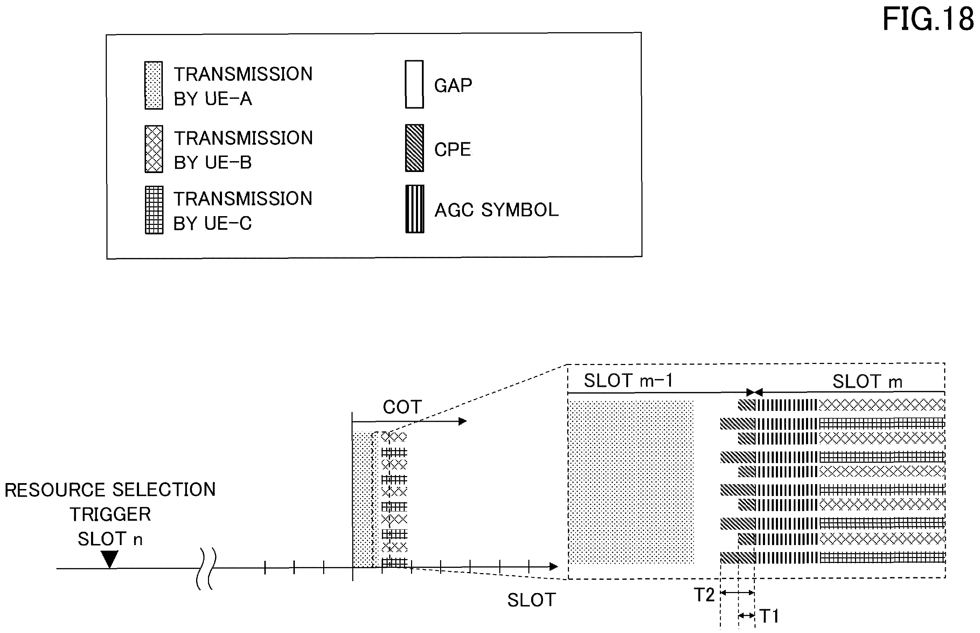

Fig. 18 is a drawing for describing an example (3) of an SL transmission in an embodiment of the present invention. The following Operation 1) to Operation 4) will be described by using the following 1) to 3) as premises.
1) A case is assumed in which UE-B performs resource exclusion for transmission using the CPE period T1.
2) UE-C has already reserved a resource X in slot m, and intends to perform transmission using the CPE period T2.
3) UE-B has already detected a reservation signal from UE-C.

It is to be noted that the CPE period and the CPE starting position may be used interchangeably between UE-B and UE-C. For example, "T2 > T1" and "T1 - T2" may be used.

Operation 1) In a case of T1 < T2, UE-B may perform resource exclusion with respect to a resource that does not overlap with a resource X in the frequency domain among resources in slot m. In other words, in a case where a CPE transmission starting position by UE-C is earlier than a CPE transmission starting position by UE-B, UE-B may perform resource exclusion with respect to a resource that does not overlap with a resource X in the frequency domain among resources in slot m.

For example, in a case of T1 < T2, UE-B may always perform resource exclusion with respect to a resource that does not overlap with a resource X in the frequency domain among resources in slot m.

For example, in a case where T1 < T2 and the reception RSRP related to the reservation is equal to or greater than a predetermined value or exceeds a predetermined value, UE-B may exclude a resource that does not overlap with a resource X in the frequency domain among resources in slot m. The predetermined value may be provided by a configuration or a pre-configuration, or may be a value based on power, RSRP, or a power threshold value used for determining LBT success or failure. For example, the predetermined value may be a value that is the same as power, RSRP, or a power threshold value for determining LBT success or failure, or may be a value obtained by adding an offset.

For example, in a case where T1 < T2 and T2 - T1 is equal to or greater than a predetermined value or exceeds a predetermined value, UE-B may exclude a resource that does not overlap with a resource X in the frequency domain among resources in slot m.

As illustrated in Fig. 18, in a case where UE-B detects that UE-C has reserved a resource including an AGC symbol indicated by "transmission by UE-C", at the time of slot n at which a resource selection trigger occurs, resources including an AGC symbol indicated by "transmission by UE-B" that are frequency division multiplexed may be excluded.

The delay performance can be improved by excluding, from the resource selection target, a resource for which LBT will fail as described in the above-described Operation 1).

Operation 2) In a case of T1 < T2, UE-B may change the CPE period from T1 to T2 when UE-B uses a resource Y that does not overlap with a resource X in the frequency domain. In other words, in a case where a CPE transmission starting position by UE-C is earlier than a CPE transmission starting position by UE-B, UE-B may change the CPE period from T1 to T2 when UE-B uses a resource Y that does not overlap with a resource X in the frequency domain.

For example, in Fig. 18, the resource X may be a resource including an AGC symbol indicated by "transmission by UE-C", and the resource Y may be a resource including an AGC symbol indicated by "transmission by UE-B".

For example, information related to changing of the CPE period from T1 to T2 may be transmitted by a reservation signal corresponding to the resource Y. For example, Operation 2) may be applied by limiting the case to a case in which the resource Y has already been reserved.

According to the above-described Operation 2), the transmission timing can be adjusted in a manner in which frequency division multiplexed transmissions can be performed.

Operation 3) The above-described Operation 1) or the above-described Operation 2) may be combined with the reevaluation and/or the preemption check. For example, Operation 1) may be applied in the reevaluation and/or the preemption check. For example, with respect to Operation 2), Operation 2) may be applied to a case in which a reservation signal of the resource X is detected in the reevaluation and/or the preemption check.

According to the above-described Operation 3), the resource can be determined based on the CPE period in the reevaluation and/or the preemption check.

Operation 4) With respect to the above-described Operation 1) or the above-described Operation 2), IUC scheme 1 and/or IUC scheme 2 may be combined.

With respect to Operation 1), Operation 1) may be applied at the time of determination of a preferred resource and/or a non-preferred resource.

With respect to Operation 1), Operation 1) may be applied at the time of collision detection. For example, in a case where a signal for reserving a resource that does not overlap with a resource X in the frequency domain is detected and a CPE period T3 of the signal is less than T2, PSFCH may be transmitted by determining that there is a collision. For example, in a case where a signal for reserving a resource that does not overlap with a resource X in the frequency domain and that overlaps with a resource X in the time domain is detected and a CPE period T3 of the signal is less than T2, PSFCH may be transmitted by determining that there is a collision.

Information related to the CPE period may be transmitted at the time of transmitting information indicating the preferred resource and/or non-preferred resource. The reception-side UE may determine whether or not the resource is to be used or may determine the CPE period, based on the information.

According to the above-described Operation 4), in the IUC scheme, the resource can be determined by taking into account the CPE period.

It is to be noted that, in an embodiment of the present invention, the conventional structures of an SL channel and an SL signal are used, but the structures are not limited to the conventional structures. For example, an embodiment of the present invention may be applied to a case in which an interlaced channel is applied as a configuration for satisfying the OCB requirements.

It is to be noted that an embodiment of the present invention may be applied by limiting the case to a case in which a predetermined condition is satisfied. For example, an embodiment of the present invention may be applied by being associated with a predetermined SL channel or an SL signal. For example, an embodiment of the present invention may be applied to any one of PSCCH/PSSCH, PSFCH, S-SSB, and SL positioning RS. For example, an embodiment of the present invention may be applied based on a predetermined configuration or pre-configuration. For example, an embodiment of the present invention may be applied to a case in which "enabling" of an embodiment of the present invention is provided by a configuration or pre-configuration. For example, in a case where the LBT method related to the second SL transmission is not Type 1, or has become a type other than Type 1, an embodiment of the present invention is not required to be applied.

It is to be noted that, in order to apply LBT Type 2A, 2B, or 2C, an additional transmission (additional TX) such as a CP extension, may be performed immediately before the transmission P.

It is to be noted that the UE capability related to the applicability or operation of an embodiment of the present invention may be defined, and may or may not be reported to the base station 10 and/or the terminal 20.

It is to be noted that the SL transmission by the UE may be any one of PSCCH, PSSCH, PSFCH, S-SSB, or SL-PRS, and each operation of the present embodiment may be applied to a different channel or signal.

It is to be noted that at least one of the UE SL transmissions may be a UL transmission.

An embodiment of the present invention may be applied to any one of resource selection, resource reselection, reevaluation, or preemption check.

It is to be noted that a method of an embodiment of the present invention is not limited to being applied to the above-described case of device-to-device direct communication, and may be applied to other similar cases.

The above embodiments need not be limited to V2X terminals, and may be applied to terminals performing D2D communication.

According to an embodiment of the present invention, in the device-to-device direct communication in an unlicensed band, when performing the COT sharing, the delay performance or the resource utilization efficiency can be improved by performing an operation by taking into account the CPE period.

In other words, COT (Channel occupancy time) sharing can be applied to the device-to-device direct communication in an unlicensed band.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

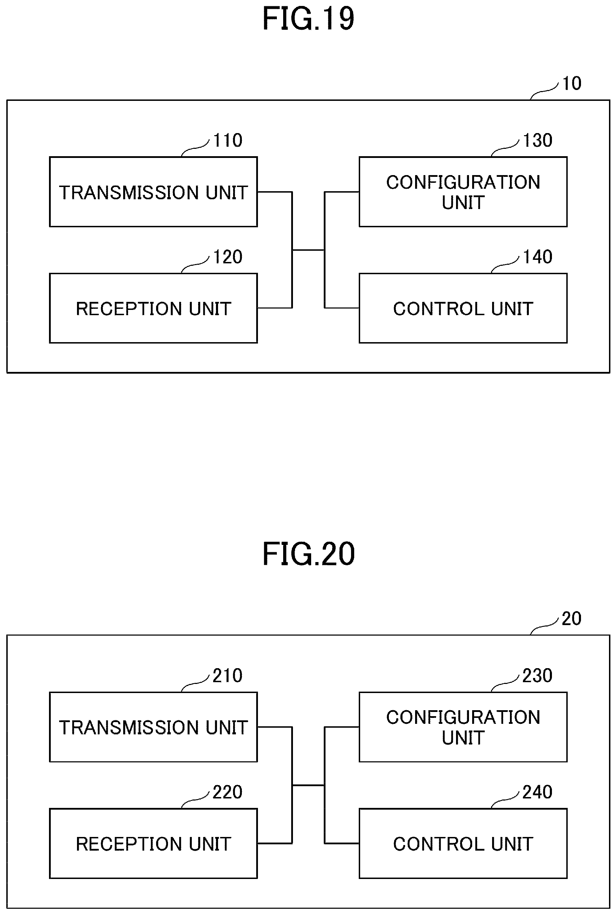

Fig. 19 is a diagram illustrating an example of a functional configuration of the base station 10. As shown in Fig. 19, the base station 10 includes a transmission unit 110, a reception unit 120, a configuration unit 130, and a control unit 140. The functional configuration illustrated in Fig. 19 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DL reference signals, and the like to the terminal 20.

The configuration unit 130 stores preset configuration information and various configuration information items to be transmitted to the terminal 20 in a storage apparatus and reads the preset configuration information from the storage apparatus as necessary. Contents of the configuration information are, for example, information related to configuration of D2D communication, etc.

As described in an embodiment, the control unit 140 performs processing related to the configuration in which the terminal 20 performs D2D communication. Further, the control unit 140 transmits scheduling of D2D communication and DL communication to the terminal 20 through the transmission unit 110. Further, the control unit 140 receives information related to the HARQ response of the D2D communication and the DL communication from the terminal 20 via the reception unit 120. The functional units related to signal transmission in the control unit 140 may be included in the transmission unit 110, and the functional units related to signal reception in the control unit 140 may be included in the reception unit 120.

### <Terminal 20>

Fig. 20 is a diagram illustrating an example of a functional configuration of the terminal 20. As shown in Fig. 20, the terminal 20 includes a transmission unit 210, a reception unit 220, a configuration unit 230, and a control unit 240. The functional configuration illustrated in Fig. 20 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, or reference signals transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the other terminal 20, PSCCH, PSSCH, PSDCH, PSBCH, etc.

The configuration unit 230 stores various configuration information received from the base station 10 or the terminal 20 by the reception unit 220 in the storage apparatus and reads them from the storage apparatus as necessary. In addition, the configuration unit 230 also stores pre-configured configuration information. Contents of the configuration information are, for example, information related to configuration of D2D communication, etc.

The control unit 240 controls D2D communication for establishing RRC connection with another terminal 20 as described in an embodiment of the present invention. Further, the control unit 240 performs processing related to the power-saving operation. Further, the control unit 240 performs HARQ related processing of the D2D communication and DL communication. Further, the control unit 240 transmits, to the base station 10, information related to the HARQ response of the D2D communication to the other terminal 20 and the DL communication scheduled by the base station 10. Further, the control unit 240 may perform scheduling of D2D communication for another terminal 20. In addition, the control unit 240 may autonomously select a resource to be used for D2D communication from the resource selection window based on the sidelink sensing result or may perform reevaluation or preemption. Further, the control unit 240 performs processing related to power saving in transmission and reception of D2D communications. In addition, the control unit 240 performs processing related to inter-terminal coordination in D2D communication. In addition, the control unit 240 performs a process related to LBT in the D2D communication. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 19 and Fig. 20) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

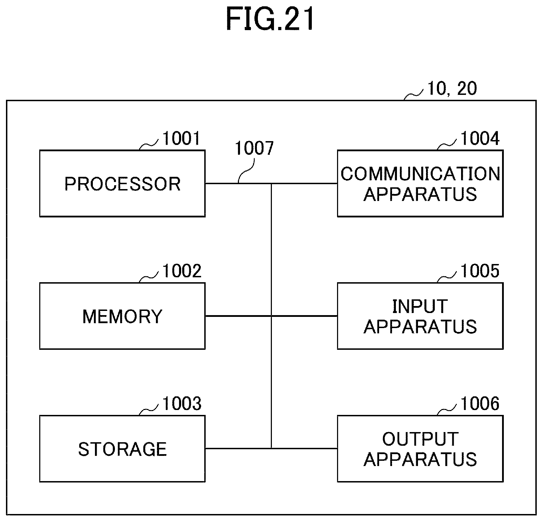

For example, the base station 10, the terminal 20, etc., according to an embodiment of the present disclosure may function as a computer for processing the radio communication method of the present disclosure. Fig. 21 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 19 may be implemented by control programs that are stored in the memory 1002 and that operate on the processor 1001. In addition, for example, the control unit 240 of the terminal 20 illustrated in Fig. 20 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

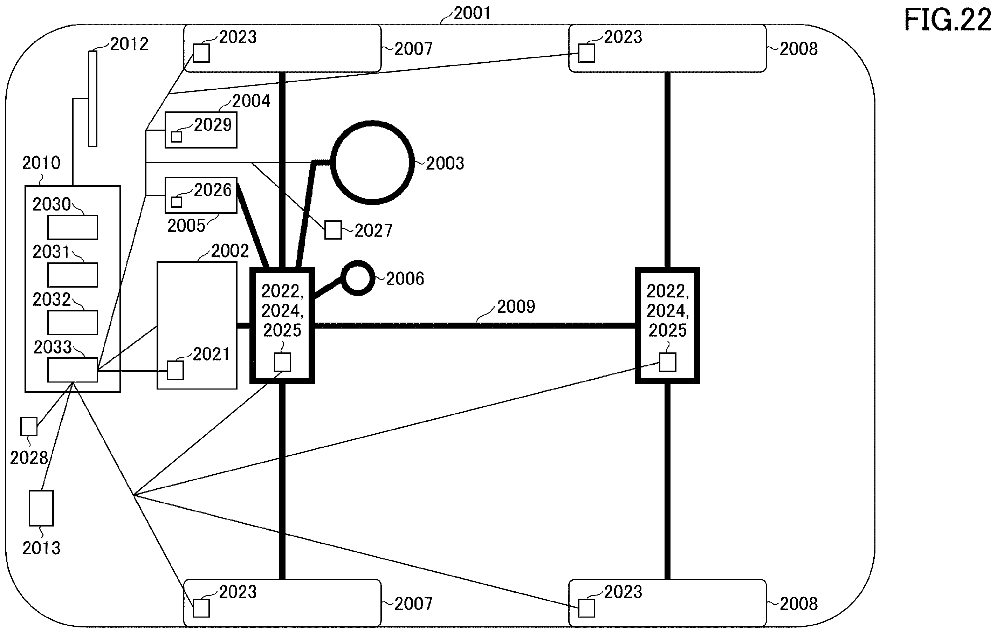

Fig. 22 shows an example of a configuration of a vehicle 2001. As shown in Fig. 22, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to perform an LBT (Listen before talk) without a random back-off, the LBT being performed for performing transmission in a unit time immediately after a first signal related to device-to-device direct communication, and the first signal being transmitted in a COT (Channel occupancy time) obtained by one of terminals in an unlicensed band; a transmission unit configured to transmit a second signal in a case where the LBT is successful; and a control unit configured to detect a reservation of a third signal that is to be transmitted in the unit time by another terminal. In a case where a plurality of CPE starting positions can be applied to the second signal and the third signal, the control unit excludes a resource in the unit time from transmission candidates or performs transmission in the unit time, based on a CPE (Cyclic-Prefix extension) starting position that is applied to the third signal.

According to the above-described configuration, in the device-to-device direct communication in an unlicensed band, when performing the COT sharing, the delay performance or the resource utilization efficiency can be improved by performing an operation by taking into account the CPE period. In other words, COT (Channel occupancy time) sharing can be applied to the device-to-device direct communication in an unlicensed band.

In a case where a CPE starting position that is to be applied to the third signal is earlier than a CPE starting position that is to be applied to the second signal, the control unit may exclude, from transmission candidates, a resource that does not overlap with the third signal in a frequency domain among resources in the unit time. According to the above-described configuration, in the device-to-device direct communication in an unlicensed band, when performing the COT sharing, the delay performance or the resource utilization efficiency can be improved by performing an operation by taking into account the CPE period.

In a case where a CPE starting position that is to be applied to the third signal is earlier than a CPE starting position that is to be applied to the second signal and a period obtained by subtracting a CPE period that is to be applied to the second signal from a CPE period that is to be applied to the third signal exceeds a threshold value, the control unit may exclude, from transmission candidates, a resource that does not overlap with the third signal in a frequency domain among resources in the unit time. According to the above-described configuration, in the device-to-device direct communication in an unlicensed band, when performing the COT sharing, the delay performance or the resource utilization efficiency can be improved by performing an operation by taking into account the CPE period.

In a case where a CPE starting position that is to be applied to the third signal is earlier than a CPE starting position that is to be applied to the second signal, the control unit may change the CPE period that is to be applied to the second signal to the CPE period that is to be applied to the third signal. According to the above-described configuration, in the device-to-device direct communication in an unlicensed band, when performing the COT sharing, the delay performance or the resource utilization efficiency can be improved by performing an operation by taking into account the CPE period.

In a case where a CPE starting position that is to be applied to the third signal is earlier than a CPE starting position that is to be applied to the second signal, the control unit may change a CPE period that is to be applied to the second signal to a CPE period that is to be applied to the third signal and may include information indicating the changed CPE period in a reservation signal for the second signal. According to the above-described configuration, in the device-to-device direct communication in an unlicensed band, when performing the COT sharing, the delay performance or the resource utilization efficiency can be improved by performing an operation by taking into account the CPE period.

In addition, according to an embodiment of the present invention, a communication method performed by a terminal is provided. The communication method includes: performing an LBT (Listen before talk) without a random back-off, the LBT being performed for performing transmission in a unit time immediately after a first signal related to device-to-device direct communication, and the first signal being transmitted in a COT (Channel occupancy time) obtained by one of terminals in an unlicensed band; transmitting a second signal in a case where the LBT is successful; detecting a reservation of a third signal that is transmitted in the unit time by another terminal; and, in a case where a plurality of CPE starting positions can be applied to the second signal and the third signal, excluding a resource in the unit time from transmission candidates or performing transmission in the unit time, based on a CPE (Cyclic-Prefix extension) starting position that is applied to the third signal.

According to the above-described configuration, in the device-to-device direct communication in an unlicensed band, when performing the COT sharing, the delay performance or the resource utilization efficiency can be improved by performing an operation by taking into account the CPE period. In other words, COT (Channel occupancy time) sharing can be applied to the device-to-device direct communication in an unlicensed band.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), higher layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present international patent application is based on and claims priority to Japanese patent application No. 2022-182178 filed on November 14, 2022, the entire contents of which are hereby incorporated herein by reference.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to perform an LBT (Listen before talk) without a random back-off, the LBT being performed for performing transmission in a unit time immediately after a first signal related to device-to-device direct communication, and the first signal being transmitted in a COT (Channel occupancy time) obtained by one of terminals in an unlicensed band;
a transmission unit configured to transmit a second signal in a case where the LBT is successful; and
a control unit configured to detect a reservation of a third signal that is to be transmitted in the unit time by another terminal, wherein
in a case where a plurality of CPE starting positions can be applied to the second signal and the third signal, the control unit excludes a resource in the unit time from transmission candidates or performs transmission in the unit time, based on a CPE (Cyclic-Prefix extension) starting position that is applied to the third signal.

2. The terminal as claimed in claim 1, wherein
in a case where a CPE starting position that is to be applied to the third signal is earlier than a CPE starting position that is to be applied to the second signal, the control unit excludes, from transmission candidates, a resource that does not overlap with the third signal in a frequency domain among resources in the unit time.

3. The terminal as claimed in claim 1, wherein
in a case where a CPE starting position that is to be applied to the third signal is earlier than a CPE starting position that is to be applied to the second signal and a period obtained by subtracting a CPE period that is to be applied to the second signal from a CPE period that is to be applied to the third signal exceeds a threshold value, the control unit excludes, from transmission candidates, a resource that does not overlap with the third signal in a frequency domain among resources in the unit time.

4. The terminal as claimed in claim 1, wherein
in a case where a CPE starting position that is to be applied to the third signal is earlier than a CPE starting position that is to be applied to the second signal, the control unit changes a CPE period that is to be applied to the second signal to a CPE period that is to be applied to the third signal.

5. The terminal as claimed in claim 1, wherein
in a case where a CPE starting position that is to be applied to the third signal is earlier than a CPE starting position that is to be applied to the second signal, the control unit changes a CPE period that is to be applied to the second signal to a CPE period that is to be applied to the third signal and includes information indicating the changed CPE period in a reservation signal for the second signal.

6. A communication method performed by a terminal, the communication method comprising:
performing an LBT (Listen before talk) without a random back-off, the LBT being performed for performing transmission in a unit time immediately after a first signal related to device-to-device direct communication, and the first signal being transmitted in a COT (Channel occupancy time) obtained by one of terminals in an unlicensed band;
transmitting a second signal in a case where the LBT is successful;
detecting a reservation of a third signal that is transmitted in the unit time by another terminal; and
in a case where a plurality of CPE starting positions can be applied to the second signal and the third signal, excluding a resource in the unit time from transmission candidates or performing transmission in the unit time, based on a CPE (Cyclic-Prefix extension) starting position that is applied to the third signal.
